# EUROPÄISCHE PATENTANMELDUNG

(11) **EP 1 093 964 A2**
(43) Veröffentlichungstag der Anmeldung: **25.04.2001**
(21) Anmeldenummer: 00121083.0
(22) Anmeldetag: 28.09.2000
(51) Int. Cl.: B60P 3/34

(54) **Ausziehvorrichtung sowie Wohnwagen oder Wohnmobil mit ausziehbaren Seitenteilen**

(30) Priorität: 18.10.1999 AT 175399
(71) Anmelder: Fulterer Gesellschaft m.b.H., 6890 Lustenau (AT)
(72) Erfinder: Corona, Stefan, 6850 Dornbirn (AT)
(74) Vertreter: Hefel, Herbert, Dipl.-Ing.

(57) **Zusammenfassung**

Eine Ausziehvorrichtung umfaßt eine feststehende Schiene, welche im Bereich ihres vorderen Endes eine oder mehrere Stützrollen aufweist, und eine von der feststehenden Schiene getragene Ausziehschiene, welche beim Ausziehen über die Stützrollen abrollt und im Bereich ihres rückwärtigen Endes eine oder mehrere Laufrollen aufweist, wobei die feststehende Schiene seitlich auskragende Flansche aufweist, die als Laufflächen für die Laufrollen der Ausziehschiene dienen. Die Ausziehschiene (2, 2') ist länger als die feststehende Schiene (1, 1') ausgebildet und erstreckt sich im eingefahrenen Zustand über das rückwärtige Ende (17) der feststehenden Schiene (1,1') hinaus, wobei die Laufrollen (7, 8) der Ausziehschiene (2, 2') außerhalb der Laufflächen der feststehenden Schiene (1, 1') liegen und die Ausziehschiene (2, 2') auf einer im rückwärtigen Bereich der feststehenden Schiene (1, 1') angebrachten Lagereinrichtung (6) aufliegt.

## Beschreibung

Die Erfindung betrifft eine Ausziehvorrichtung mit einer feststehenden Schiene, welche im Bereich ihres vorderen Endes eine oder mehrere Stützrollen aufweist, und einer von der feststehenden Schiene getragenen Ausziehschiene, welche beim Ausziehen über die Stützrollen abrollt und im Bereich ihres rückwärtigen Endes eine oder mehrere Laufrollen aufweist, wobei die feststehende Schiene seitlich auskragende Flansche aufweist, die als Laufflächen für die Laufrollen der Ausziehschiene dienen. Weiters betrifft die Erfindung einen Wohnwagen oder ein Wohnmobil mit mindestens einem aus einer Seitenwand an der Außenseite des Wohnwagens oder Wohnmobils ausziehbaren Seitenteil.

Ausziehvorrichtungen der eingangs genannten Art sind bekannt und werden beispielsweise als Auszüge für Hochschränke eingesetzt. Auch bei Wohnwagen oder Wohnmobilen, welche aus einer Seitenwand an der Außenseite ausziehbare, kastenartige Seitenteile aufweisen, werden derartige Ausziehvorrichtungen verwendet.

Bei manchen Anwendungen der herkömmlichen Ausziehvorrichtungen der eingangs genannten Art, insbesondere bei deren Anwendung als Wohnwagenauszug, kommt es im ausgezogenen Zustand der Ausziehvorrichtung durch die feststehende Schiene zu Behinderungen. Wenn der hinter den ausgezogenen Teilen sich befindende Raum im ausgezogenen Zustand dieser Teile benutzt werden soll, bilden die hinteren Enden der feststehenden Schienen in diesen Raum ragende Schwellen, über welche ein Benutzer leicht stolpern kann.

Aufgabe der Erfindung ist es, eine Ausziehvorrichtung der eingangs genannten Art bereitzustellen, durch die dieser Nachteil überwunden wird. Erfindungsgemäß gelingt dies dadurch, daß die Ausziehschiene länger als die feststehende Schiene ausgebildet ist und sich im eingefahrenen Zustand über das rückwärtige Ende der feststehenden Schiene hinaus erstreckt, wobei die Laufrollen der Ausziehschiene außerhalb der Laufflächen der feststehenden Schiene liegen und die Ausziehschiene auf einer im rückwärtigen Bereich der feststehenden Schiene angebrachten Lagereinrichtung aufliegt.

Im ausgezogenen Zustand erstreckt sich somit die feststehende Schiene der Ausziehvorrichtung weniger weit nach hinten in den dort zu nutzenden Raum, wodurch dieser Raum von störenden Erhebungen am Boden freigehalten werden kann. Weiters wird durch die Erfindung eine Materialeinsparung erreicht, da die feststehende Schiene kürzer ausgebildet werden kann.

In einer bevorzugten Ausführungsform der Erfindung weist die Lagereinrichtung zumindest eine Rolle oder Walze auf, über welche die Ausziehschiene in der ersten Phase des Ausziehens, in der die Laufrollen der Ausziehschiene außerhalb der Laufflächen der feststehenden Schiene liegen, abrollt. Wenn eine höhere Reibung in dieser ersten Phase des Ausziehens jedoch keine Rolle spielt, könnte anstelle der Rolle oder Walze auch ein Gleitlagerteil vorgesehen sein.

Weitere Einzelheiten und Vorteile der Erfindung werden im folgenden anhand eines in den Zeichnungen gezeigten Ausführungsbeispiels der Erfindung erlautert. Es zeigen:
Fig. 1 eine erfindungsgemäße Ausziehvorrichtung in der vollständig eingefahrenen Stellung in einer perspektivischen Ansicht von schräg oben;
Fig. 2 eine perspektivische Ansicht von schräg unten der Ausziehvorrichtung von Fig. 1 in der vollständig eingefahrenen Stellung;
Fig. 3 eine perspektivische Darstellung von schräg oben der Ausziehvorrichtung von Fig. 1 in einer teilweise ausgefahrenen Stellung;
Fig. 4 eine perspektivische Darstellung von schräg oben der Ausziehvorrichtung von Fig. 1 in der vollständig ausgefahrenen Stellung;
Fig. 5 eine perspektivische Darstellung von schräg unten der Ausziehvorrichtung von Fig. 1 in der vollständig ausgefahrenen Stellung;
Fig. 6 und Fig. 7 eine Seitenansicht und eine Draufsicht der Ausziehvorrichtung von Fig. 1 in der vollständig ausgefahrenen Stellung;
Fig. 8 eine schematische Darstellung einer Rückansicht eines Wohnwagens mit ausgezogenen Seitenteilen;
Fig. 9 und Fig. 10 schematische Querschnitte durch einen Teil des Wohnwagens von Fig. 8 mit eingefahrenem und ausgefahrenem rechten Seitenteil;
Fig. 11 und Fig. 12 schematische Schnittdarstellungen eines ersten und eines zweiten Ausführungsbeispiels von erfindungsgemäßen Ausziehvorrichtungen und von diesen getragenen, ausziehbaren Teilen.

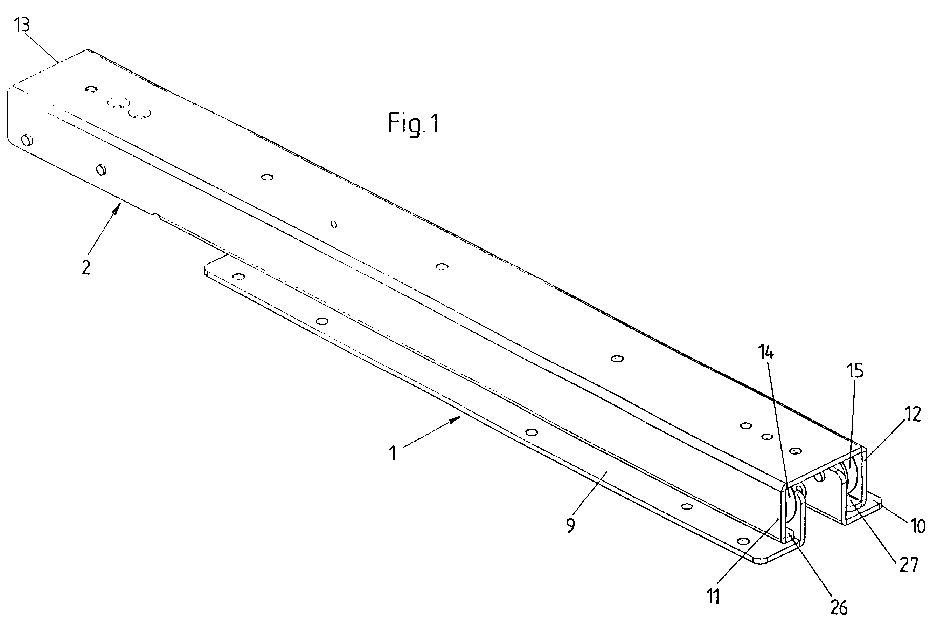

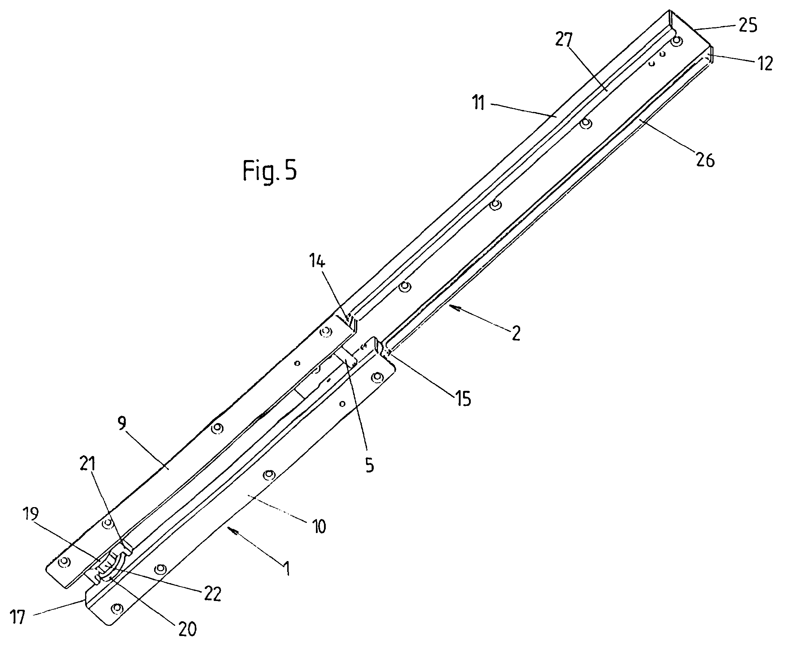

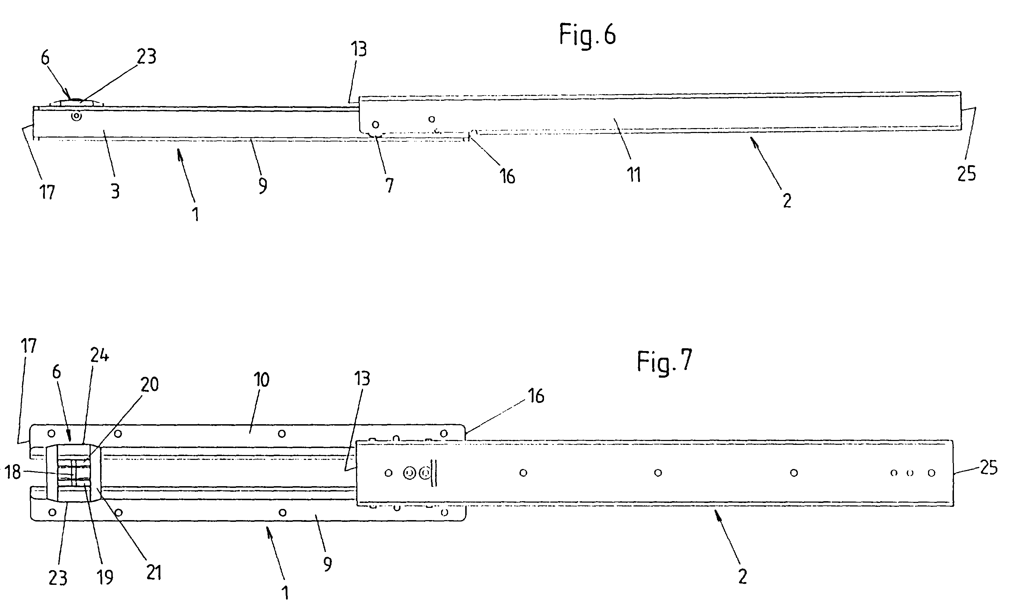

Das in den Figuren 1 bis 7 dargestellte Ausführungsbeispiel einer erfindungsgemäßen Ausziehvorrichtung weist eine feststehende Schiene 1 und eine ausziehbare Ausziehschiene 2 auf. Die feststehende Schiene 1 umfaßt zwei C-förmige Profile 3, 4, die mit ihren geschlossenen Seiten gegeneinanderweisen und im Bereich ihres vorderen Endes über einen Querbolzen 5 und in ihrem rückwärtigen Bereich durch die weiter unten noch genauer beschriebene Lagereinrichtung 6 miteinander verbunden sind. Die seitlich auskragenden Flansche der beiden C-förmigen Profile 3, 4 bilden jeweils Laufflächen für die beiden Laufrollen 7, 8 der Ausziehschiene. Die unteren, nach außen gerichteten Flansche der C-förmigen Profile 3, 4 sind jeweils nach außen verlängert und bilden Befestigungsflansche 9, 10 der feststehenden Schiene. Im Bereich des vorderen Endes 16 der feststehenden Schiene 1 sind die oberen, nach außen gerichteten Flansche der C-Profile 3, 4 ausgespart und an den vertikalen Stegen der beiden C-Profile 3, 4 sind die Stützrollen 14, 15 angeordnet, die mit ihren Laufflächen etwas über die Oberseiten der C-Profile 3, 4 vorstehen und über die die Ausziehschiene beim Ausziehen abrollt.

Die Ausziehschiene ist U-förmig ausgebildet, wobei sich die beiden U-Schenkel der Ausziehschiene 2 an den Außenseiten der C-Profile 3, 4 nach unten erstrecken. Im Bereich des rückwärtigen Endes 13 der Ausziehschiene 2 tragen die U-Schenkel 11, 12 auf ihren den C-Profilen 3, 4 zugewandten Seiten die Laufrollen 7, 8.

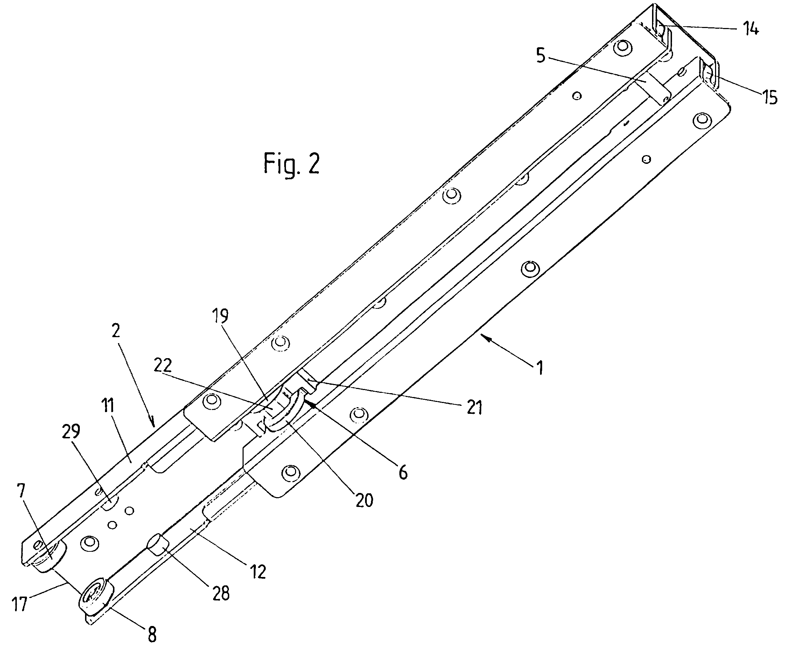

In der in den Figuren 1 und 2 dargestellten, völlig eingefahrenen Stellung der Ausziehvorrichtung ragt der rückwärtige Bereich der Ausziehschiene 2 über das rückwärtige Ende der feststehenden Schiene 1 hinaus und die Laufrollen 7, 8 liegen in dieser Stellung außerhalb der Laufflächen der C-Profile 3, 4. In dieser Stellung wird die Ausziehschiene 2 im Bereich des rückwärtigen Endes 17 der feststehenden Schiene 1 von der Lagereinrichtung 6 abgestützt. Die Lagereinrichtung 6 weist dazu die beiden Rollen 19, 20 auf, die über die Oberkanten der C-Profile 3, 4 etwas vorstehen und von der Achse 18 getragen werden, welche die beiden C-Profile 3, 4 im Bereich des rückwärtigen Endes 17 der feststehenden Schiene verbindet. Die Lagereinrichtung 6 weist weiters ein Führungsteil 21 auf, das die beiden C-Profile 3, 4 übergreift, Ausnehmungen für die Rollen 19, 20 aufweist und einen nach unten reichenden Fortsatz 22 besitzt, der eine Bohrung aufweist, durch welche die Achse 18 verläuft. Die Seitenflächen 23, 24, die sich etwas weiter als die oberen, nach außen gerichteten Flansche der C-Profile 3, 4 nach außen erstrecken, bilden Seitenführungen für die Ausziehschiene 2.

Damit die Ausziehschiene 2 im in den Figuren 1 und 2 dargestellten, völlig eingefahrenen Zustand der Ausziehvorrichtung nicht um die Lagereinrichtung 6 als Drehpunkt mit ihrem rückwärtigen Bereich nach unten abkippen kann, wenn sie in dieser Stellung im rückwärtigen Bereich belastet wird, sind an den beiden U-Schenkeln 11, 12 der Ausziehschiene 2 zumindest in einem an ihr vorderes Ende 25 angrenzenden Bereich an ihren freien Enden nach innen gerichtete Fortsätze 26, 27 zur Umgreifung der Stützrollen 14, 15 vorgesehen. Alternativ könnte die Ausziehschiene 2 auch im Bereich ihres vorderen Endes 25 einen nach unten gerichteten, hakenförmigen Ansatz aufweisen, der im eingefahrenen Zustand der Ausziehvorrichtung den Querbolzen 5 umgreift.

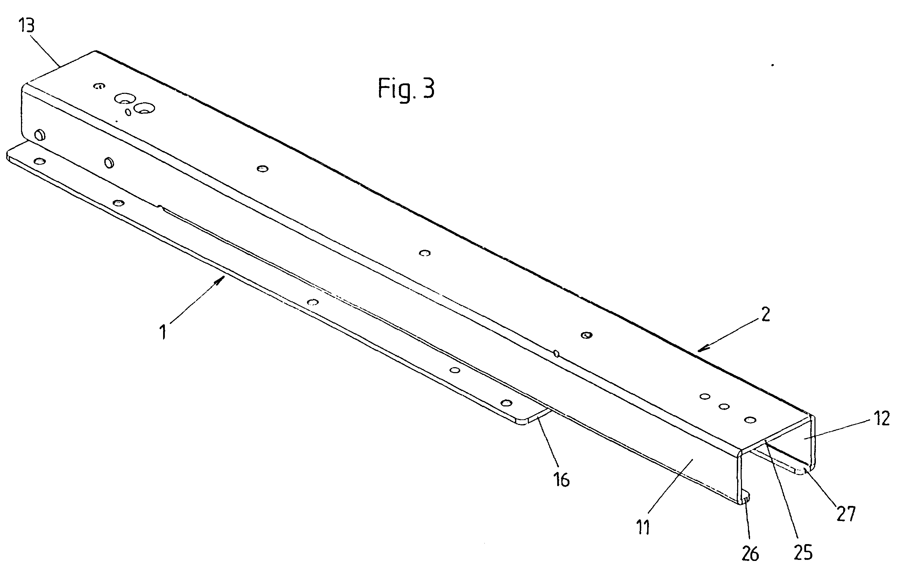

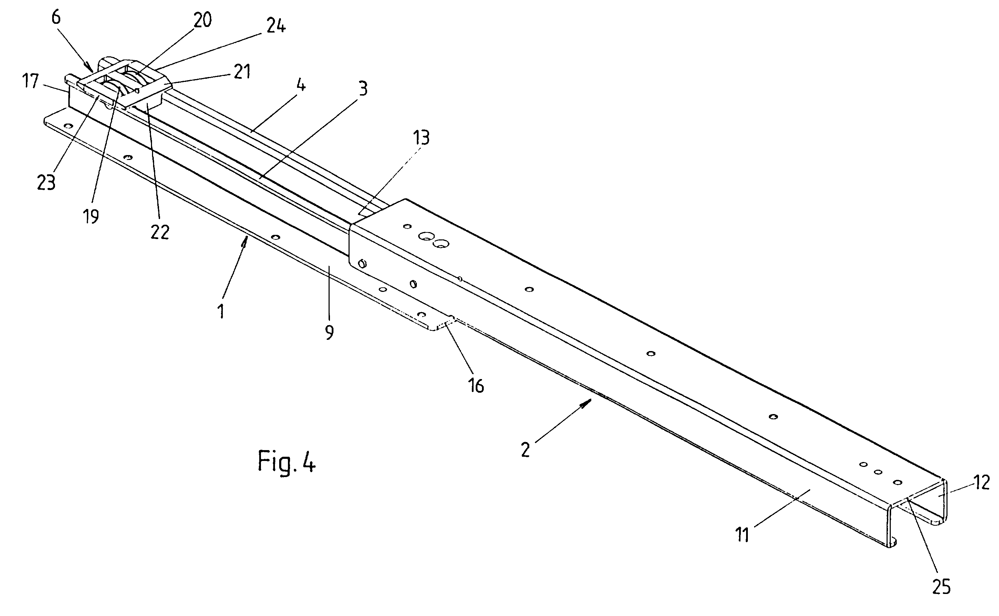

Beim Ausziehen der Ausziehvorrichtung von der in den Figuren 1 und 2 dargestellten, völlig eingefahrenen Stellung rollt die Ausziehschiene 2 zunächst über die Rollen 19, 20 der Lagereinrichtung 6 ab. In der in Fig. 3 dargestellten, teilweise ausgefahrenen Stellung liegen die Laufrollen 7, 8 bereits in den Laufflächen der C-Profile 3, 4. Um ein sauberes Einfädeln der Laufrollen 7, 8 in die Laufflächen der C-Profile 3, 4 zu ermöglichen, stehen die Rollen 19, 20 soweit über die oberen Ränder der C-Profile 3, 4 vor, daß die Ausziehschiene 2 durch diese Rollen 19, 20 etwas angehoben wird und die Laufrollen 7, 8 um die Hälfte ihres zwischen den Laufflächen vorhandenen Spiels gegenüber den unteren Fortsätzen der C-Profile 3, 4 angehoben sind. Beim weiteren Ausziehen der Ausziehvorrichtung, wenn das rückwärtige Ende 13 der Ausziehschiene 2 über die Rollen 19, 20 gezogen wurde, sinken die Laufrollen 7, 8 auf die unteren Flansche der C-Profile 3, 4 ab und rollen auf diesen in Richtung des vorderen Endes 16 der feststehenden Schiene 1. Bei einem gewissen Punkt des Ausziehens, der von der Lastverteilung auf der Ausziehschiene 2 abhängt, kippt das vordere Ende 25 der Ausziehschiene um die Stützrollen 14, 15 als Drehpunkt nach unten und die Laufrollen 7, 8 liegen an den oberen Flanschen der C-Profile 3, 4 an und rollen entlang von diesen weiter in Richtung des vorderen Endes 16 der feststehenden Schiene. Der maximale, in den Figuren 4 bis 7 dargestellte Auszug ist schließlich erreicht, wenn die Anschläge 28, 29 an den Stützrollen 14, 15 anliegen.

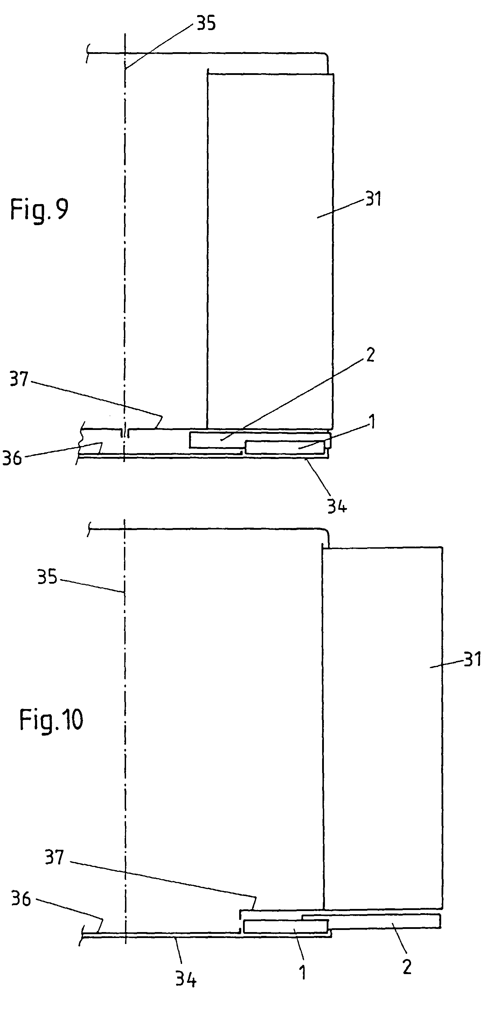

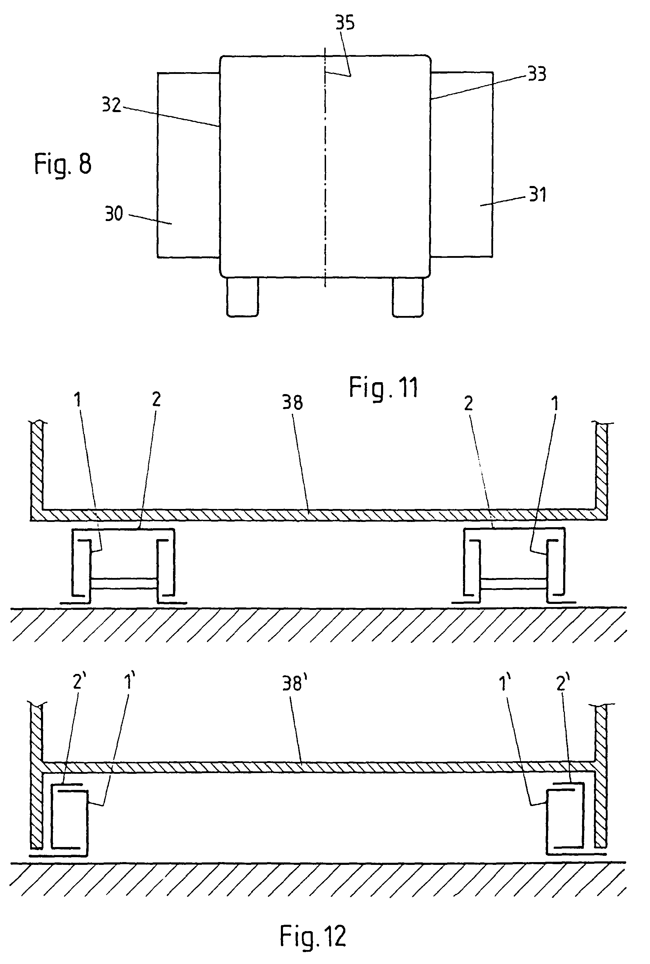

In Fig. 8 ist die schematische Rückansicht eines Wohnwagens dargestellt, bei dem Seitenteile 30, 31 aus den Seitenwänden 32, 33 auf deren Außenseiten ausziehbar sind. In Fig. 8 ist der ausgezogene Zustand dieser Seitenteile 30, 31 dargestellt. In den in den Figuren 9 und 10 dargestellten schematischen Querschnitten ist in der Fig. 9 die eingezogene und in der Fig. 10 die ausgezogene Stellung des rechten Seitenteils 31 dargestellt. Unterhalb der Seitenteile 30, 31 sind beispielsweise jeweils zwei Ausziehvorrichtungen vorgesehen (vgl. auch die in Fig. 11 gezeigte schematische Darstellung). Die kürzer ausgebildete feststehende Schiene 1 ist jeweils am Boden 34 des Wohnwagens befestigt. Der Boden 35 des ausziehbaren Seitenteils 30, 31 erstreckt sich über das rückwärtige Ende der Ausziehschiene 2 hinaus und reicht in der eingezogenen Stellung des Seitenteils 30, 31 jeweils bis zur vertikalen Längsmittelebene 35 des Wohnwagens. Ein Bodenbelag 36 reicht unter den rückwärtigen, überstehenden Bereich der Ausziehschiene 2 bis zum rückwärtigen Ende der feststehenden Schiene 1. Im vollständig ausgezogenen Zustand schließt der über das rückwärtige Ende der Ausziehschiene hinaus sich erstreckende Boden 37 des Seitenteils 30, 31 gerade mit dem rückwärtigen Ende der feststehenden Schiene 1 ab. Es ergibt sich somit zusammen mit dem bis zum rückwärtigen Ende der feststehenden Schiene 1 reichenden Bodenbelag 36, in Draufsicht gesehen, eine durchgehende Bodenfläche. Diese weist, in Längsrichtung des Wohnwagens gesehen, keine störenden, querverlaufenden Schwellen auf.

In den Figuren 11 und 12 sind zwei Ausführungsbeispiele der erfindungsgemäßen Ausziehvorrichtung einander gegenübergestellt. Jeweils sind die ausziehbaren Teile 38, 38' auf bzw. an linken und rechten Ausziehschienen 2, 2' befestigt, welche ihrerseits von feststehenden Schienen 1, 1' getragen werden und entlang diesen ausziehbar sind. Die Ausziehvorrichtung der Fig. 11 entspricht dem bereits beschriebenen Ausführungsbeispiel der Erfindung. Bei dem in Fig. 12 gezeigten Ausführungsbeispiel werden die feststehenden Schienen 1' jeweils von einem einzelnen C-förmigen Profil gebildet. Die Ausziehschienen 2' werden ebenfalls von C-Profilen gebildet und die offenen Seiten der C-Profile der feststehenden Schiene 1' und der Ausziehschiene 2' sind einander zugewandt, wobei der obere Fortsatz der Ausziehschiene 2' über dem oberen Fortsatz der feststehenden Schiene 1' und der untere Fortsatz der Ausziehschiene 2' über dem unteren Fortsatz der feststehenden Schiene 1' liegt. Die beiden in der Fig. 12 gezeigten Ausziehvorrichtungen entsprechen somit im wesentlichen einer einzelnen, in Fig. 11 gezeigten Ausziehvorrichtung, die entlang ihrer vertikalen Längsmittelebene aufgeteilt wurde. Die Laufrollen, Stützrollen, Lagereinrichtungen und weiteren Einzelheiten der Ausziehvorrichtung sind in den Fig. 11 und 12 nicht dargestellt, sind aber entsprechend dem in den Figuren 1 bis 7 dargestellten Ausführungsbeispiel aufgebaut.

### Legende zu den Hinweisziffern:

- 1, 1': feststehende Schiene
- 2, 2': Ausziehschiene
- 3: C-Profil
- 4: C-Profil
- 5: Querbolzen
- 6: Lagereinrichtung
- 7: Laufrolle
- 8: Laufrolle
- 9: Befestigungsflansch
- 10: Befestigungsflansch
- 11: U-Schenkel
- 12: U-Schenkel
- 13: rückwärtiges Ende
- 14: Stützrolle
- 15: Stützrolle
- 16: vorderes Ende
- 17: rückwärtiges Ende
- 18: Achse
- 19: Rolle
- 20: Rolle
- 21: Führungsteil
- 22: Fortsatz
- 23: Seitenfläche
- 24: Seitenfläche
- 25: vorderes Ende
- 26: Fortsatz
- 27: Fortsatz
- 28: Anschlag
- 29: Anschlag
- 30: Seitenteil
- 31: Seitenteil
- 32: Seitenwand
- 33: Seitenwand
- 34: Boden
- 35: Längsmittelebene
- 36: Bodenbelag
- 37: Boden
- 38, 38': ausziehbarer Teil

## Patentansprüche

1. Ausziehvorrichtung mit einer feststehenden Schiene, welche im Bereich ihres vorderen Endes eine oder mehrere Stützrollen aufweist, und einer von der feststehenden Schiene getragenen Ausziehschiene, welche beim Ausziehen über die Stützrollen abrollt und im Bereich ihres rückwärtigen Endes eine oder mehrere Laufrollen aufweist, wobei die feststehende Schiene seitlich auskragende Flansche aufweist, die als Laufflächen für die Laufrollen der Ausziehschiene dienen, dadurch gekennzeichnet, daß die Ausziehschiene (2, 2') länger als die feststehende Schiene (1, 1') ausgebildet ist und sich im eingefahrenen Zustand über das rückwärtige Ende (17) der feststehenden Schiene (1,1') hinaus erstreckt, wobei die Laufrollen (7, 8) der Ausziehschiene (2, 2') außerhalb der Laufflächen der feststehenden Schiene (1, 1') liegen und die Ausziehschiene (2, 2') auf einer im rückwärtigen Bereich der feststehenden Schiene (1, 1') angebrachten Lagereinrichtung (6) aufliegt.

2. Ausziehvorrichtung nach Anspruch 1, dadurch gekennzeichnet, daß die Lagereinrichtung (6) zumindest eine Rolle (19, 20) oder Walze aufweist, über welche die Ausziehschiene (2, 2') in der ersten Phase des Ausziehens, in der die Laufrollen (7, 8) der Ausziehschiene (2, 2') außerhalb der Laufflächen der feststehenden Schiene (1,1') liegen, abrollt.

3. Ausziehvorrichtung nach Anspruch 1, dadurch gekennzeichnet, daß die Lagereinrichtung (6) einen Gleitlagerteil aufweist, über welchen die Ausziehschiene (2, 2') in der ersten Phase des Ausziehens, in der die Laufrollen (7, 8) der Ausziehschiene (2, 2') außerhalb der Laufflächen der feststehenden Schiene (1, 1') liegen, gleitet.

4. Ausziehvorrichtung nach einem der Ansprüche 1 bis 3, dadurch gekennzeichnet, daß die Lagereinrichtung (6) eine Seitenführung (23, 24) für die Ausziehschiene (2, 2') in der ersten Phase des Ausziehens, in der die Laufrollen (7, 8) der Ausziehschiene (2, 2') außerhalb der Laufflächen der feststehenden Schiene (1, 1') liegen, bildet.

5. Ausziehvorrichtung nach einem der Ansprüche 1 bis 4, dadurch gekennzeichnet, daß die feststehende Schiene (1) zwei miteinander verbundene, mit ihren geschlossenen Seiten gegeneinanderweisende C-Profile (3, 4) aufweist, welche zwei Laufflächen für die Laufrollen (7, 8) der Ausziehschiene (2) bilden.

6. Ausziehvorrichtung nach Anspruch 5, dadurch gekennzeichnet, daß die beiden C-Profile (3, 4) im rückwärtigen Bereich der feststehenden Schiene (1) durch die Lagereinrichtung (6), vorzugsweise durch eine Achse (18) für eine Rolle (19, 20) oder Walze der Lagereinrichtung (6), verbunden werden.

7. Ausziehvorrichtung nach Anspruch 5 oder Anspruch 6, dadurch gekennzeichnet, daß die Ausziehschiene (2) U-förmig ausgebildet ist, wobei sich die beiden U-Schenkel (11, 12) der Ausziehschiene (2) an den Außenseiten der C-Profile (3, 4) nach unten erstrecken und im Bereich des rückwärtigen Endes (13) der Ausziehschiene auf ihren den C-Profilen (3, 4) zugewandten Seiten die Laufrollen (7, 8) tragen.

8. Ausziehvorrichtung nach Anspruch 7, dadurch gekennzeichnet, daß die beiden U-Schenkel (11, 12) der Ausziehschiene (2) zumindest in einem an ihr vorderes Ende (25) angrenzenden Bereich an ihren freien Enden nach innen gerichtete Fortsätze (26, 27) zur Umgreifung der Stützrollen (14, 15) aufweisen.

9. Ausziehvorrichtung nach Anspruch 7, dadurch gekennzeichnet, daß im Bereich des vorderen Endes (25) der Ausziehschiene (2) diese einen nach unten gerichteten, hakenförmigen Ansatz aufweist, der im eingefahrenen Zustand der Ausziehvorrichtung einen die beiden C-Profile (3, 4) der feststehenden Schiene (1) im Bereich ihres vorderen Endes (16) verbindenden Querbolzen (5) umgreift.

10. Ausziehvorrichtung nach einem der Ansprüche 1 bis 9, dadurch gekennzeichnet, daß die Ausziehschiene (2, 2') um mehr als 20 %, vorzugsweise um mehr als 30 % länger als die feststehende Schiene (1, 1') ist.

11. Wohnwagen oder Wohnmobil mit einem oder mehreren aus den Seitenwänden an der Außenseite des Wohnwagens oder Wohnmobils ausziehbaren Seitenteilen, dadurch gekennzeichnet, daß die ausziehbaren Seitenteile (30, 31) auf Ausziehvorrichtungen nach einem der Ansprüche 1 bis 10 gelagert sind.

12. Wohnwagen oder Wohnmobil nach Anspruch 11, dadurch gekennzeichnet, daß sich der Boden (37) der ausziehbaren Seitenteile (30, 31) über das rückwärtige Ende der Ausziehschiene, vorzugsweise bis etwa zur vertikalen Längsmittelebene (35) des Wohnwagens bzw. Wohnmobils erstreckt.

13. Wohnwagen oder Wohnmobil nach Anspruch 11 oder Anspruch 12, dadurch gekennzeichnet, daß sich der Bodenbelag (36) des stationären Bodens (37) des Wohnwagens bzw. Wohnmobils im eingefahrenen Zustand der ausziehbaren Seitenteile (30, 31) unter das rückwärtige Ende der Ausziehschiene (2, 2') erstreckt, vorzugsweise bis zum rückwärtigen Ende der feststehenden Schiene (1, 1').

14. Wohnwagen oder Wohnmobil nach einem der Ansprüche 11 bis 13, dadurch gekennzeichnet, daß auf beiden Seiten des Wohnwagens bzw. Wohnmobils ein ausziehbares Seitenteil (30, 31) vorgesehen ist.
